# EUROPEAN PATENT APPLICATION

(11) **EP 3 392 514 A1**
(43) Date of publication of application: **24.10.2018**
(21) Application number: 16875761.5
(22) Date of filing: 16.12.2016
(51) Int. Cl.: F16C 33/44, F16C 19/16, F16C 33/42, F16C 33/62, F16C 33/66

(54) **DEEP-GROOVE BALL BEARING**

(30) Priority: 18.12.2015 JP 2015247500
(71) Applicant: NTN Corporation, Osaka-shi, Osaka 550-0003 (JP)
(72) Inventor: KANBORI, Yasuhiro, Iwata-shi Shizuoka 438-8510 (JP)
(74) Representative: White, Duncan Rohan
(86) International application number: PCT/JP2016/087493
(87) International publication number: WO 2017/104787

(57) **Abstract**

To provide a deep groove ball bearing used under a lean lubrication condition or a non-lubrication condition, the deep groove ball bearing being capable of achieving a long lifetime without generating break of a retainer due to delay and progress of balls. The deep groove ball bearing includes an inner ring, an outer ring, a plurality of balls interposed between the inner ring and the outer ring, and a riveted corrugate steel plate retainer that retains the balls, the deep groove ball bearing being used under a lean lubrication condition or a non-lubrication condition. The retainer includes a fluroresin coating film having a thickness of 15 µm or more formed on at least a raceway surface of the inner ring or the outer ring, or an inner portion of the retainer slid on the balls. The fluororesin coating film is preferably formed of a baked polytetrafluoroethylene resin or the like.

## Description

### TECHNICAL FIELD

The present invention relates to a deep groove ball bearing, in particular relates to a deep groove ball bearing used in a vehicle compressor or a vehicle motor under a high-misalignment condition, a lean lubrication condition or a non-lubrication condition.

### BACKGROUND ART

A vehicle motor has been downsized recently, and therefore rigidity of a housing becomes low and high-misalignment is generated easily in association with the downsizing. With this, a bearing might be broken in an early stage. Further, a compressor is used under a lean lubrication condition, and therefore, in a deep groove ball bearing for a compressor, delay and progress of balls (hereinafter, also referred to as ball) is generated due to high-misalignment applied to the deep groove ball bearing, so that a retainer is broken.

A rolling bearing having a distribution of carbon concentration set to be lower at a side of the surface than at an inside thereof and a distribution of nitrogen concentration set to be higher at the side of the surface than at the inside thereof in a surface layer of a raceway ring and/or a rolling element in order to suppress deterioration of a lifetime of the rolling bearing used under a lean lubrication condition or a non-lubrication condition, is known (Patent Document 1).

### PRIOR ART DOCUMENT

### PATENT DOCUMENT

Patent Document 1: JP 2002-206523 A

### SUMMERY OF THE INVENTION

### PROBLEMS TO BE SOLVED BY THE INVENTION

However, even in the rolling bearing disclosed in Patent Document 1, the retainer might be broken in the rolling bearing for the compressor used under the lean lubrication condition or the non-lubrication condition or in the rolling bearing for the motor in which the high-misalignment is generated. Accordingly, further improvement of the bearing is required.

In recent years, a lubricant used in a bearing, which is not only limited to such usages, has been low in viscosity due to an environment problem. In a deep groove ball bearing, when excessive misalignment is generated, a contact angle of each ball in the bearing is changed, and therefore the orbital speeds of the balls become different. Consequently, a phenomenon called delay and progress of the balls in which a retainer is strained by a progressed ball and a delayed ball, is generated. Further, when the high-misalignment is generated in lean lubrication, the retainer might be broken from a corner R due to abnormal wear of a pocket or the delay and progress of the balls.

As a countermeasure of the break of the retainer due to the delay and progress of the balls, for example, a shape or a dimension of the retainer may be modified such that a gap of pockets in a circumferential direction of the retainer is larger than an amount of the delay and progress of the balls. However, in a riveted corrugate steel plate retainer generally used as the deep groove ball bearing, both sides of the retainer are fixed by rivets, and therefore the countermeasure might be failed depending on the dimensional relation. Further, it can be considered that a material of the retainer is strengthened by using SUS (stainless steel) so as to hardly generate wear of the pocket caused by the delay and progress of the balls. However, SUS is so hard that early wear or break of a molding die is caused. Consequently, productivity of the retainer is deteriorated, and therefore a producing cost of the retainer is increased. Thus, the retainer is not suitable to a producing method using press processing.

An object of the present invention is, in order to solve such a problem, to provide a deep groove ball bearing used under a high-misalignment condition, a lean lubrication condition or a non-lubrication condition, the deep groove ball bearing being capable of achieving a long lifetime without generating break of a retainer due to delay and progress of balls.

### MEANS FOR SOLVING THE PROBLEM

A deep groove ball bearing of the present invention used under a lean lubrication condition or a non-lubrication condition, the deep groove ball bearing including an inner ring, an outer ring, a plurality of balls interposed between the inner ring and the outer ring, and a retainer that retains the balls. The retainer includes a fluororesin coating film having a thickness of 15 µm or more formed on at least a portion of the retainer slid on the balls. In particular, the retainer may be formed as a riveted corrugate steel plate retainer . Further, the fluororesin coating film may be formed as a baked fluororesin coating film. Further, the fluororesin coating film may be formed on at least the raceway surface of the inner ring or the outer ring.

The deep groove ball bearing of the present invention may be used in a sealed container of a compressor.

### EFFECT OF THE INVENTION

The deep groove ball bearing of the present invention includes the fluororesin coating film having a thickness of 15 µm or more formed on at least the portion of the retainer slide on the balls. Accordingly, the deep groove ball bearing of the present invention can achieve a long lifetime without generating break of the retainer used under a high-misalignment condition, a lean lubrication condition or a non-lubrication condition.

### BRIEF DESCRIPTION OF THE DRAWINGS

Fig. 1 is a cross-sectional view of a deep groove ball bearing according to one embodiment of the present invention.
Fig. 2 is an enlarged perspective view of a retainer shown in Fig. 1.
Figs. 3(a) and 3(b) are cross-sectional views of other deep groove ball bearings.
Fig. 4 is a cross-sectional view of a scroll type compressor.

### MODE FOR CARRYING OUT THE INVENTION

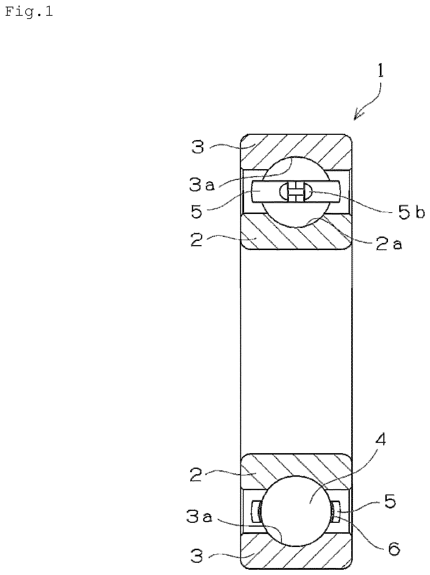

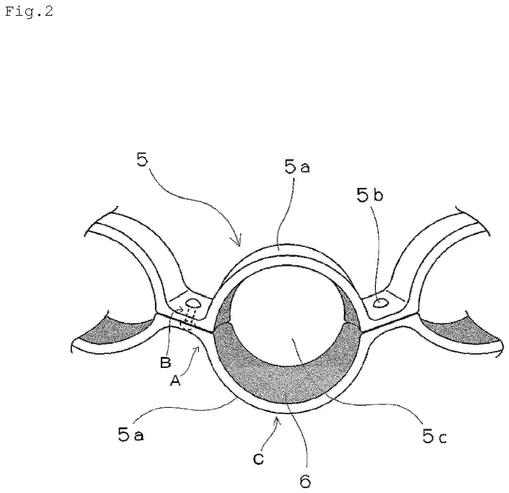

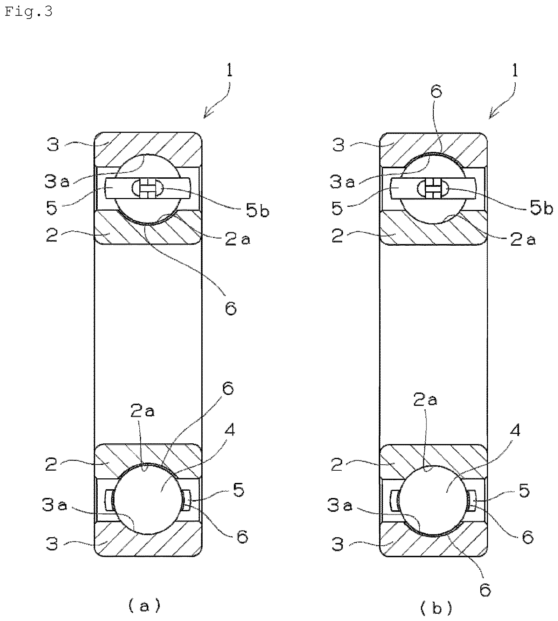

A deep groove ball bearing of the present invention is described with reference to Fig. 1 to Figs. 3(a) and 3(b). Fig. 1 is a cross-sectional view of a deep groove ball bearing in which a fluororesin coating film is formed on an inner surface of a pocket of a retainer. Fig. 2 is an enlarged view of the retainer shown in Fig. 1. Fig. 3(a) is a cross-sectional view of a deep groove ball bearing in which a fluororesin coating film is formed on an inner ring raceway surface, and Fig. 3(b) is a cross-sectional view of a deep groove ball bearing in which a fluororesin coating film is formed on an outer ring raceway surface.

As shown in Fig. 1, a deep groove ball bearing 1 is provided with an inner ring 2 having an inner ring raceway surface 2a on an outer periphery, an outer ring 3 having an outer ring raceway surface 3a on an inner periphery, and a plurality of balls 4 that rolls between the inner ring raceway surface 2a and the outer ring raceway surface 3a. The balls 4 are retained by a retainer 5 at a predetermined interval in a circumferential direction.

A fluororesin coating film 6 is formed on a slide surface of the retainer 5 on which the ball 4 is slid. As shown in Fig. 2, the retainer 5 is formed as a riveted corrugate steel plate retainer formed by fastening two components 5a, 5b, which are formed by press forming an iron-based material described below, by using a rivet. The retainer 5 includes a retainer pocket 5c that retains the ball 4 served as a rolling element. An inner peripheral surface of the retainer pocket 5c (pocket surface) is served as a slide surface with the ball 4. The fluororesin coating film 6 is formed on at least the pocket surface. Here, the fluororesin coating film 6 may be formed on at least one slide surface among a slide surface slid on the raceway ring (the inner ring 2 or the outer ring 3) and a slide surface slid on the ball 4. Further, the fluororesin coating film 6 may be further formed on the inner ring raceway surface 2a, the outer ring raceway surface 3a or the like shown in Fig. 1 and Fig. 2 in addition to the slide surface of the retainer 5.

Figs. 3(a) and 3(b) show examples of the deep groove ball bearing 1 in which the fluororesin coating film 6 is formed on at least the raceway surface of the inner ring or the outer ring. In the deep groove ball bearing 1 shown in Fig. 3(a), the fluororesin coating film 6 is formed on an outer peripheral surface of the inner ring 2 (including the inner ring raceway surface 2a). In the deep groove ball bearing 1 shown in Fig. 3(b), the fluororesin coating film 6 is formed on an inner peripheral surface of the outer ring 3 (including the outer ring raceway surface 3a). In a case in which the fluororesin coating film 6 is formed on the inner ring or the outer ring, the fluororesin coating film 6 may be formed on at least the raceway surface thereof. Accordingly, as shown in each figure, the fluororesin coating film 6 may be formed on a whole of the outer peripheral surface of the inner ring, a whole of the inner peripheral surface of the outer ring, a whole of the inner ring, or a whole of the outer ring.

The inner ring 2 and the outer ring 3, which are bearing components, on which the fluororesin coating film 6 is formed, are formed of an iron-based material. Any steel material generally used in the bearing component can be adopted as the iron-based material. Examples of the iron-based material include high carbon chromium bearing steel (SUJ1, SUJ2, SUJ3, SUJ4, SUJ5 or the like; JIS G 4805), carburized steel (SCr420, SCM 420 or the like; JIS G 4053), stainless steel (SUS440C or the like; JIS G 4303), high-speed steel (M50 or the like), and cold-rolled steel.

The retainer 6 on which the fluororesin coating film 6 is formed, is formed of an iron-based material. Any material generally used as material for a retainer can be adopted as the iron-based material. Examples of the iron-based material include a cold-rolled plate for a pressed retainer (SPCC; JIS G 3141 or the like), stainless steel (SUS440C or the like; JIS G 4303), carbon steel for a machined retainer (JIS G 4051), and high strength brass casting for a machined retainer (JIS H 5102 or the like). Further, other bearing alloy may be adopted.

Examples of fluororesin that forms the fluororesin coating film 6 include polytetrafluoroethylene resin (hereinafter, referred to as PTFE), tetrafluoroethylene-perfluoro (alkyl vinyl ether) copolymer resin (hereinafter, referred to as PFA), tetrafluoroethylene-hexafluoropropylene copolymer resin (hereinafter, referred to as FEP), ethylene-tetrafluoroethylene copolymer resin, polyvinylidene fluoride resin, and polyvinyl fluoride resin. These resins can be used independently or as a mixture thereof . Of these resins, PTFE is preferable because of its excellent heat resistance and excellent sliding performance.

A surface of the retainer or the like on which the coating film is formed is roughened by using shot blast or the like, and then, the surface is immersed into an organic solution such as petroleum benzene and degreased. After primer liquid is applied to the surface, the fluororesin coating film 6 is formed on the surface by using fluororesin coating liquid.

An example of the primer liquid includes aqueous dispersion formed by dispersing fluororesin and heat resistance resin such as aromatic amide imide resin into water including non-proton extreme solvent such as nonionic surfactant, inorganic pigment, and N-methyl-2-pyrrolidone. The non-proton extreme solvent can be mixed with water at any rate. Further, the fluororesin coating liquid is formed by aqueous dispersion into which PTFE resin particles are dispersed.

The fluororesin coating film 6 is formed by applying and drying the fluororesin coating liquid on a surface of the retainer or the like after the primer liquid is thinly applied and dried on the surface. As the applying method, a spray method, a dipping method, a brush painting method or the like that can form a coating film, may be adopted. The spray method is preferable because the surface roughness and the coating shape of the fluororesin coating film 6 are made small as much as possible and excellent uniformity of a coating film thickness can be obtained.

A drying condition of the fluororesin coating film is, for example, a temperature of 90 °C for 30 minutes. The coating film thickness of the fluororesin coating film is set to be more than 5 µm and equal to or less than 20 µm, preferably set to be equal to or more than 15 µm and equal to or less than 20 µm. In a case in which the coating film thickness of the fluororesin coating film is not more than 5 µm, a time to break in a durability test described below becomes short. Further, the coating film thickness of the fluororesin coating film is more than 20 µm, a crack might be generated in forming the coating film or the coating film might be peeled during operation, so that a lubrication state is deteriorated.

It is preferable that the fluororesin coating film 6 is baked after being dried. By baking the fluororesin coating film 6, adhesiveness to the surface of the retainer or the like is improved. As a result, the time to the break is largely extended. The fluororesin coating film 6 is baked in a furnace at a baking condition of a temperature of a melting point in the air or more of the fluororesin, preferably a temperature in a range between the melting point (Tm) + 30 °C and the melting point (Tm) + 100 °C, for 5 minutes to 40 minutes. In a case in which the fluororesin is formed of PTFE, the fluororesin coating film is preferably baked in a furnace at a temperature of 380 °C for 30 minutes.

The deep groove ball bearing 1 in which the fluororesin coating film is formed on a part of the retainer slid on at least the ball and/or at least the raceway surface of the inner ring or the outer ring can be used as a deep groove ball bearing for a compressor or a deep groove ball bearing for a vehicle electric auxiliary device such as a deep groove ball bearing for a compressor, a deep groove ball bearing for a fan coupling device, a deep groove ball bearing for a vehicle alternator and a deep groove ball bearing for an idler pulley.

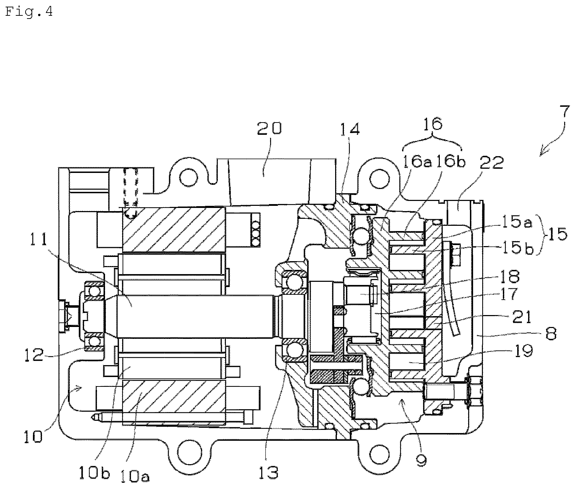

Fig. 4 shows one example of a compressor using the deep groove ball bearing of the present invention. Fig. 4 is a cross-sectional view of a scroll type compressor . A scroll type compressor 7 is formed as an electric compressor suitable to a refrigerating cycle having coolant as working fluid. The scroll type compressor 7 is provided with a compression mechanism 9 arranged in a housing 8 at a right side in the figure, and an electric motor 10, which drives the compression mechanism 9, arranged in the housing 8 at a left side in the figure. In the electric motor 10, a rotation drive shaft 11 fixed to a center shaft of a rotor 10b is rotated by a rotation magnetic field generated by a stator 10a fixed in the housing 8. The rotation drive shaft 11 is supported in a rotatable manner via deep groove ball bearings 12, 13. A space at a side of the compression mechanism 9 and a space at a side of the electric motor 10 are partitioned by a partition wall 14. The deep groove ball bearing 13 is fixed to the partition wall 14.

The compression mechanism 9 is formed as a scroll type compression mechanism provided with a fixed scroll 15 and a movable scroll 16 arranged to face the fixed scroll 15. The fixed scroll 15 is formed by a substrate 15a having a circular plate shape, and a spiral wall 15b having a spiral shape arranged perpendicularly to the substrate 15a and extended from the substrate 15a toward the left side in the figure. Further, the movable scroll 16 is formed by a substrate 16a having a circular plate shape, and a spiral wall 16b having a spiral shape arranged perpendicularly to the substrate 16a and extended from the substrate 16a toward the right side in the figure. An eccentric shaft 18 arranged eccentrically against an axis of the rotation drive shaft 11 is arranged in a fitting recess 17 formed at a center of a rear surface of the substrate 16a so as to be rotated around the axis of the rotation drive shaft 11.

The spiral walls 15b, 16b are fitted to each other between the fixed scroll 15 and the movable scroll 16, so that a compression chamber 19 is formed by a space surrounded by the substrate 15a and the spiral wall 15b of the fixed scroll 15 and the substrate 16a and the spiral wall 16b of the movable scroll 16.

The coolant is introduced into the compression chamber 19 from a suction port 20, and then the coolant is compressed and discharged from a discharge port 22 via a discharge hole 21 formed at a substantially center of the rear of the fixed scroll 15. The discharged coolant is pressure-fed to the refrigerating cycle not shown in the figure.

In the scroll type compressor, the deep groove ball bearings 12, 13 are used in presence of both of the coolant and a refrigerator oil. The coolant and the refrigerator oil are largely changed in concentration in a compressor container 8, and therefore the coolant and the refrigerator oil might block a discharge valve in the refrigerating cycle in presence of a grease component of the bearing. Thus, it is difficult to use a grease sealed bearing in the scroll type compressor . Further, misalignment is easily generated due to the mechanism of the scroll type compressor, and therefore the retainer might be broken easily due to abnormal wear of the pocket or the delay and progress of the balls.

In a case of a retainer, in particular a riveted corrugate steel plate retainer, examples of the countermeasure to deal with the problem of the break of the retainer include a countermeasure (1) of thickening a plate thickness of the retainer, a countermeasure (2) of enhancing surface hardness by a salt bath soft-nitriding treatment, a countermeasure (3) of combining the countermeasures (1) and (2), a countermeasure (4) of adopting SUS (stainless steel) as material of the retainer, and the like. The countermeasure (4) is the most superior, however problems of deterioration of a use environment of the bearing and inferior productivity due to wear of the molding die at an early state or break of the molding die might arise.

The fluororesin coating film has excellent chemical resistance against the coolant and the refrigerator oil, and excellent sliding performance. Further, the baked fluororesin coating film has excellent adhesiveness to a base material. Thus, the fluororesin coating film is suitable to a surface coating film on a sliding part of a deep groove ball bearing for a hermetic compressor arranged in a sealed container. The deep groove ball bearing of the present invention can be used in a rotary type compressor, a reciprocating type compressor, a swash plate type compressor or the like, in addition to the scroll type compressor.

### EXAMPLE

### Examples 1 and 2

A PTFE resin layer was formed on a surface of a metal flat plate formed of material shown in Table 1 (SPCC having a thickness of 1 mm). The PTFE resin layer was dried in a thermostatic oven at a temperature of 90 °C for 30 minutes, and then the PTFE resin layer was baked in a furnace at a temperature of 380 °C for 30 minutes. The riveted corrugate steel plate retainer shown in Fig. 2 was produced by using the metal flat plate having the fluororesin coating film thereon such that the fluororesin coating film is arranged at a side of an inner surface of the pocket. A deep groove ball bearing (6206C3) having a substantially uniform radial gap was produced by using the retainer.

A durability test was performed by using the obtained deep groove ball bearing at a condition described below. The result is shown in Table 1. Here, a time to break is an average calculated from the times to the break of several test pieces. The time to the break is represented by a ratio against a time to the break in a comparative example 1 which is defined as 100. Further, as the broken portion of the retainer, A denotes a corner R portion, B denotes a rivet hole portion, and C denotes a pocket apex portion.

### Durability test condition

Rotation speed: 3,000 RPM
Moment load: 19.6 N·m
Lubrication state: completely degreased state in which a lubricant does not exist at all
Test pieces: three pieces in each example

### Comparative Examples 1 and 2

A comparative example 1 is a standard deep groove ball bearing (6206C3) in which the fluororesin coating film is not formed on the pocket surface of the retainer. A comparative example 2 is a deep groove ball bearing as same as that in the comparative example 1 except that the material of the retainer is replaced with SUS (stainless steel).

### Comparative Examples 3 and 4

A comparative example 3 is a deep groove ball bearing as same as that in the example 1 except that a thickness of the fluororesin coating film is set to 5 µm. A comparative example 4 is a deep groove ball bearing as same as that in the example 2 except that a thickness of the fluororesin film is set to 5 µm.

**Table 1**

| | Material | Fluororesin coating film | | | Radial gap (mm) | Time to break (ratio) | Broken portion |
|---|---|---|---|---|---|---|---|
| | | Coating film | Baking | Film thickness (µm) | | | |
| Example 1 | SPCC | Exist | Baked | 15 | 0.025 - 0.026 | 3622 | B |
| Example 2 | SPCC | Exist | Unbaked | 15 | 0.024 - 0.025 | 1634 | B |
| Comparative example 1 | SPCC | None | - | - | 0.019 - 0.023 | 100 | A+B |
| Comparative example 2 | SUS | None | - | - | 0.021 - 0.023 | 300 | B+C |
| Comparative example 3 | SPCC | Exist | Baked | 5 | 0.024 - 0.026 | 649 | A |
| Comparative example 4 | SPCC | Exist | Unbaked | 5 | 0.024 - 0.026 | 406 | A |

As shown by the results of the examples 1 and 2, by setting the thickness of the fluororesin coating film to 15 µm, each of the durability represented by the time to the break is remarkably improved compared to the comparative examples. Further, as shown by the result of the example 1, by setting the thickness of the fluororesin coating film to 15 µm and by baking the fluororesin coating film, the durability is remarkably improved.

### INDUSTRIAL APPLICABILITY

The deep groove ball bearing of the present invention can achieve a long lifetime without generating break of the retainer used under a high-misalignment condition, a lean lubrication condition or a non-lubrication condition. Accordingly, the deep groove ball bearing of the present invention can be widely used as a bearing used in a severe environment.

### REFERENCE SIGNS LIST

- 1, 12, 13:: deep groove ball bearing
- 2:: inner ring
- 3:: outer ring
- 4:: ball
- 5:: retainer
- 6:: fluororesin coating film
- 7:: scroll type compressor
- 8:: housing
- 9:: compression mechanism
- 10:: electric motor
- 11:: rotation drive shaft
- 14:: partition wall
- 15:: fixed scroll
- 16:: movable scroll
- 17:: fitting recess
- 18:: eccentric shaft
- 19:: compression chamber
- 20:: suction port
- 21:: discharge hole
- 22:: discharge port

## Claims

1. A deep groove ball bearing used under a lean lubrication condition or a non-lubrication condition, the deep groove ball bearing comprising:
an inner ring;
an outer ring;
a plurality of balls interposed between the inner ring and the outer ring; and
a retainer that retains the balls,
wherein the retainer includes a fluroresin coating film having a thickness of 15 µm or more formed on at least a portion of the retainer slid on the balls.

2. The deep groove ball bearing according to claim 1, wherein the retainer is formed as a riveted corrugate steel plate retainer.

3. The deep groove ball bearing according to claim 1, wherein the fluororesin coating film is formed as a baked fluororesin coating film.

4. The deep groove ball bearing according to claim 1, wherein the fluororesin coating film is formed on at least the raceway surface of the inner ring or the outer ring.

5. The deep groove ball bearing according to claim 1 used in a sealed container of a compressor.
